(19) **Europäisches Patentamt / European Patent Office / Office européen des brevets**

(11) **EP 1 968 359 B2**

(12) **NOUVEAU FASCICULE DE BREVET EUROPEEN**
Après la procédure d'opposition

(45) Date de publication et mention de la décision concernant l'opposition:
**08.07.2020 Bulletin 2020/28**

(45) Mention de la délivrance du brevet:
**02.03.2011 Bulletin 2011/09**

(21) Numéro de dépôt: **07447016.2**

(22) Date de dépôt: **07.03.2007**

(51) Int Cl.:
**H05C 1/04** *(2006.01)*    **A01K 15/02** *(2006.01)*

(54) **Circuit et méthode de vérification de l'impédance d'électrodes et de contrôle de l'intensité d'un stimulus électrique**

Schaltkreis und Verfahren zum Überprüfen der Impedanz von Elektroden und zur Steuerung der Intensität eines elektrischen Stimulus

Circuit and method of verifying the impedance of electrodes and of controlling the intensity of an electric stimulus

(84) Etats contractants désignés:
**AT BE BG CH CY CZ DE DK EE ES FI FR GB GR HU IE IS IT LI LT LU LV MC MT NL PL PT RO SE SI SK TR**

(43) Date de publication de la demande:
**10.09.2008 Bulletin 2008/37**

(73) Titulaire: **Nouveaux Etablissements Charles Martin SA**
**4450 Lantin (BE)**

(72) Inventeur: **Frebel, Fabrice**
**4020 Wandre (BE)**

(74) Mandataire: **Calysta NV**
**Lambroekstraat 5a**
**1831 Diegem (BE)**

(56) Documents cités:
| | |
|---|---|
| EP-B1- 0 722 270 | AU-A4- 2005 100 421 |
| US-A- 5 425 330 | US-A- 5 713 896 |
| US-A1- 2002 079 909 | US-A1- 2006 169 222 |
| US-B1- 6 327 999 | |

EP 1 968 359 B2

## Description

### Objet de l'invention

La présente invention se rapporte à un circuit destiné à contrôler un stimulus électrique appliqué à un animal. Dans ce genre de système, le stimulus est habituellement généré par l'intermédiaire d'un collier attaché au cou de l'animal. Le collier est typiquement contrôlé à distance au moyen d'une télécommande radiofréquence. L'intensité du stimulus est variable, ce qui permet de réaliser le dressage de l'animal. La méthode de mise en œuvre du circuit de l'invention est également détaillée.

### Etat de la technique

L'utilisation de stimuli électriques est courante dans le cadre du dressage d'animaux et particulièrement de chiens. Le stimulus est appliqué à l'aide de deux électrodes en contact avec la peau de l'animal et auxquelles on applique une différence de potentiel élevée.

Bien que très efficace, la méthode présente deux inconvénients :

- si les électrodes ne sont pas suffisamment en contact avec la peau à cause de l'obstruction du pelage de l'animal, il est impossible d'appliquer le stimulus correctement ;
- si, par contre, les électrodes sont en contact parfait avec la peau et que le pelage est humide, le stimulus présente alors une amplitude excessive et fait souffrir l'animal, ce qui n'est pas le but recherché.

Une analyse de l'état de la technique montre qu'il existe notamment un circuit et une méthode associée pour résoudre le premier problème mentionné ci-dessus (voir document US 6,327,999 B1). La méthode consiste à mesurer la tension présente aux bornes des électrodes lors de l'application du stimulus. Si la tension est inférieure à un seuil donné pendant l'application de ce stimulus, le système déduit qu'une impédance non infinie est connectée entre les électrodes et donc que le contact des électrodes est bon. Si, par contre, la tension est supérieure à ce seuil donné, le contact des électrodes est considéré comme défectueux.

L'inconvénient majeur de cette technique est que la mesure du contact d'électrodes ne peut être réalisée que lors de l'application du stimulus. Or, il serait plus intéressant de vérifier le contact d'électrodes avant d'appliquer le stimulus.

Le deuxième point ci-dessus n'est cependant pas résolu, également au vu des autres documents connus dans l'état de la technique.

Ainsi, le brevet américain US-A-5,666,908 divulgue un collier de dressage où un radio-transmetteur est utilisé en conjonction avec un récepteur à microprocesseur intégré au collier pour un contrôle amélioré du niveau de stimulation électrique appliqué à l'animal via des électrodes. Un signal de contrôle comprenant des codes de niveau de stimulation est transmis au récepteur et le microprocesseur génère des trains d'impulsions de tension dont la largeur est déterminée par le code de niveau de stimulation. Le train d'impulsions généré contrôle le courant circulant dans le circuit de puissance à transformateur générant le stimulus. L'amplitude crête-à-crête des impulsions de tension appliquées aux électrodes est déterminée par la largeur des impulsions de tension dans le train d'impulsions généré. Le nombre de niveaux différents de stimulation pour un intervalle de tension donné est seulement limité par le nombre de bits utilisé pour spécifier le code précité, ce qui donne un meilleur contrôle de l'incrémentation du niveau de stimulation appliqué à l'animal.

Le brevet américain US 6,170,439 B1 divulgue un dispositif de dressage comprenant un transmetteur distant et un récepteur intégré dans un collier porté par un animal, où plusieurs niveaux de stimulation peuvent être choisis au niveau du transmetteur. L'information représentative du niveau désiré de stimulation est transmise au récepteur et démodulée pour produire un signal digital. Le microprocesseur se trouvant dans le récepteur génère en sortie un premier train d'impulsions de durée constante et de fréquence représentative du niveau de stimulation sélectionné. Ce premier train est filtré pour produire un second train d'impulsions dont la largeur est représentative du niveau sélectionné de stimulation. Ce second train d'impulsions est appliqué à l'électrode de commande de l'interrupteur couplé au transformateur qui génère les impulsions de haute tension constituant le stimulus, et dont l'intensité correspond à la largeur des impulsions du second train précité. Ainsi, les amplitudes des impulsions de haute tension appliquées aux électrodes de contact sont représentatives du niveau de stimulation sélectionné.

Le brevet américain US 6,184,790 B1 divulgue un dispositif similaire aux précédents, avec un transformateur pour la génération des impulsions de haute tension ayant une faible impédance de sortie.

Le document AU 2005100421 A4 divulgue un dispositif de contrôle électronique pour utilisation sur un animal, comprenant une paire d'électrodes destinées à être en contact avec la peau de l'animal, un générateur d'impulsions configuré pour produire un stimulus négatif aux électrodes et un actionneur pour enclencher ledit générateur d'impulsions négatives lorsqu'un comportement animal indésirable comme l'aboiement se produit. Des moyens de contrôle, comprenant un transducteur pour détecter le niveau de signal du stimulus et un comparateur pour comparer le signal détecté avec un signal de référence, sont arrangés pour contrôler les signaux négatifs de stimulus. Un dispositif d'indication est pourvu pour procurer une indication qu'un des signaux négatifs contrôlés par les moyens de contrôle se situent en dessous d'un niveau prédéterminé. Le dispositif peut être incorporé dans un effet pouvant être porté par un animal.

Le document US 2006/0169222 A1 divulgue un système de collier animalier comportant un récepteur pour la modification du comportement de l'animal. Ce système comprend un collier, une enveloppe montée sur le collier et un circuit électrique inclus dans l'enveloppe, ainsi qu'un circuit de test intégré connecté au circuit électrique permettant notamment de tester le niveau d'amplitude des impulsions haute tension de sortie.

### Buts de l'invention

La présente invention vise à fournir une solution qui permette de s'affranchir des inconvénients de l'état de la technique.

En particulier, l'invention vise à solutionner les deux problèmes susmentionnés de façon élégante à l'aide d'un circuit électronique simple et d'un algorithme d'exploitation de ce circuit.

### Principaux éléments caractéristiques de l'invention

Un premier objet de la présente invention est décrit dans la revendication 1.

Cette mesure de courant crête permet alors un asservissement à cette mesure de l'intensité du stimulus appliqué à l'animal (revendication 14).

Ainsi, selon la revendication 10, l'invention concerne aussi un appareil pour fournir et contrôler à distance un stimulus électrique appliqué à un animal, comprenant :

- un transmetteur radiofréquence configuré pour émettre un signal à distance ;
- le circuit récepteur précité, configuré pour recevoir ledit signal et pour fournir et contrôler ledit stimulus, en fonction du signal reçu.

Un deuxième objet de l'invention, selon la revendication 15, concerne un procédé (algorithme) de mise en œuvre du circuit précité, pour mesurer la qualité du contact des électrodes avec la peau de l'animal, caractérisé par les étapes suivantes :

1. on applique un signal de commande à l'interrupteur électronique dont le rapport cyclique est de 1% ;
2. on mesure la tension du signal de mesure $V_{MESURE}$ à l'aide d'un convertisseur analogue digital ; si $V_{MESURE}$ est supérieur à une valeur prédéterminée $V_{SEUIL}$, on passe à l'étape 3 ; sinon, si le rapport cyclique est inférieur à 20%, on incrémente le rapport cyclique de 1% et on recommencer à l'étape 2 ; sinon passer à l'étape 4 ;
3. on arrête la génération du signal de commande et on déclare que le contact des électrodes est bon ; on passe à l'étape 5 ;
4. on arrête la génération du signal de commande et on déclare que le contact des électrodes est insuffisant ; on passe à l'étape 5 ;
5. on attend 5 secondes et on passe à l'étape 1).

Un troisième objet de l'invention, selon la revendication 16, concerne un procédé de régulation du rapport cyclique des impulsions de commande du circuit précité, caractérisé par les étapes suivantes :

1. on génère le signal de commande avec un rapport cyclique de 1% ;
2. on mesure la tension du signal de mesure $V_{MESURE}$ et on en déduit $I_{STIMULUS, CRETE}$ à l'aide de l'équation :

$$V_{MESURE} = I_{STIMULUS, CRETE} * R1 * R3 /(R2 + R3) \ ;$$

3. si $I_{STIMULUS, CRETE}$ est inférieur à une valeur de consigne souhaitée, on augmente le rapport cyclique et on retourne à l'étape 2 ; sinon, on diminue le rapport cyclique et on retourne à l'étape 2.

Des objets complémentaires de l'invention concernent des programmes d'ordinateur, en ce compris leur support, comprenant un code convenant pour la mise en œuvre des deux algorithmes précités (revendications 17, 18 et 19) .

Des exemples de formes d'exécution de l'invention sont donnés dans les revendications dépendantes.

**Brève description des figures**

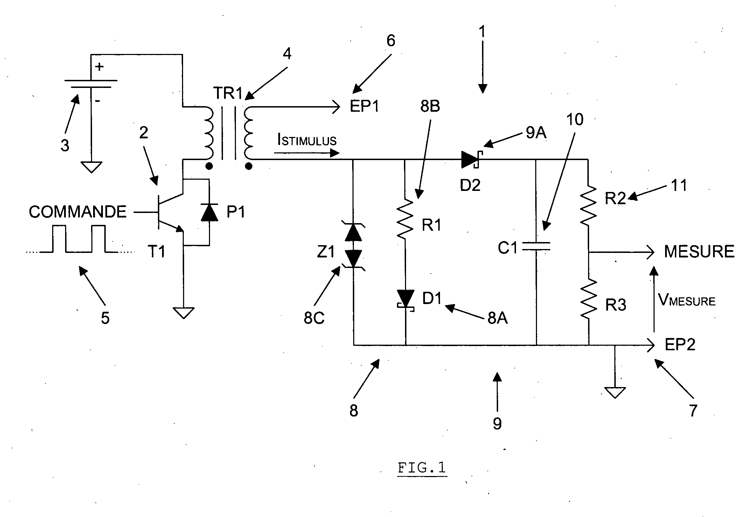

La figure 1 représente le circuit de mesure de l'intensité du stimulus selon la présente invention.

**Description d'une forme d'exécution préférée de l'invention**

Le principe de l'invention présentée ci-après est basé sur le fait que l'intensité du stimulus est directement liée à l'intensité du courant électrique traversant les électrodes.

La mesure de l'intensité du courant électrique est donc la clé qui permet de vérifier la qualité du contact des électrodes et qui permet aussi d'asservir l'intensité du stimulus.

*Méthode de mesure et schéma électrique*

La mesure du courant électrique traversant les électrodes n'est pas aisée car :

- la plage de courant qu'il faut mesurer avec précision est d'étendue importante. Typiquement il faut être capable de mesurer des courants allant de quelques centaines de μA à plus de 200mA ;
- le courant de stimulus a un caractère impulsionnel.

Le circuit de mesure de courant 1 représenté sur la figure 1 fait partie de la présente invention. Les parties du circuit destinées à générer la haute tension et connues de l'art antérieur sont également reprises afin d'en faciliter la compréhension.

L'interrupteur commandé 2 (transistor T1), la diode associée (P1) et le transformateur haute tension 4 (TR1) sont responsables de la génération du stimulus. Les autres composants sont essentiellement destinés à mesurer le courant selon la présente invention.

Pour expliquer le fonctionnement du circuit de mesure du courant, il est nécessaire de commencer par expliquer le fonctionnement de la génération du stimulus. Le stimulus est généré en appliquant un signal PWM 5 (*Pulse Width Modulation* ou modulation à largeur d'impulsion) à la base du transistor 2. Ce signal responsable de la génération du stimulus est appelé ci-après COMMANDE. Un microcontrôleur est un exemple de composant qui peut être utilisé pour générer le signal COMMANDE. Le signal PWM a typiquement une période de 1ms et un rapport cyclique de 0 à 90%. Le rapport cyclique est le rapport entre le temps pendant lequel T1 est conducteur divisé par le temps total du cycle PWM (1ms).

L'analyse d'un cycle PWM montre que le transformateur 4 (TR1) emmagasine de l'énergie pendant que T1 est conducteur (ON) et libère cette énergie lorsque T1 est coupé (OFF). La libération de cette énergie se fait au travers des électrodes de contact 6 (EP1), 7 (EP2), reliées au secondaire du transformateur TR1, ce qui génère le stimulus. Ce type de fonctionnement est appelé fonctionnement en « flyback » du transformateur 4 par l'homme du métier.

La présence de capacités parasites (non représentées) dans les bobinages de TR1 fait en sorte que la tension aux bornes des électrodes est limitée à une borne supérieure car ces capacités parasites absorbent une partie de l'énergie fournie par le transformateur, même lorsqu'aucune charge n'est placée entre les électrodes. On comprend alors facilement que plus le rapport cyclique est élevé, plus la tension aux bornes des électrodes est élevée.

Le courant $I_{STIMULUS}$ est mesuré à l'aide d'un shunt non linéaire 8 et d'un détecteur de crête 9. Le shunt 8 est formé d'un limiteur 8C (Z1), d'une résistance 8B (R1) et d'une diode passante 8A (D1). Le détecteur de crête 9 est formé par une seconde diode passante 9A (D2), un condensateur 10 (C1) et un diviseur de tension 11 (R2 et R3) .

Le courant $I_{STIMULUS}$ est le courant qui entre par l'électrode 6 (EP1), traverse le transformateur 4 et ressort par l'électrode 7 (EP2), reliée à la terre, en passant par le circuit de mesure du courant. Lorsque le courant $I_{STIMULUS}$ traverse R1 et D1, il crée une chute de tension égale à $I_{STIMULUS} * R1 + V_{D1}$ aux bornes de (R1, D1) . $V_{D1}$ est la chute de tension directe aux bornes de D1, la diode D1 étant de préférence une diode schottky pour laquelle $V_{D1}$ vaut typiquement 0,4V.

La chute de tension aux bornes de (R1, D1) est redressée par D2 qui charge C1 . La tension de charge vaut la tension aux bornes de (R1, D1) moins la chute de tension aux bornes de D2 ($V_{D2}$) . On a donc :

$$V_{C1} = I_{STIMULUS, CRETE} * R1 + V_{D1} - V_{D2} \qquad [I]$$

Comme $V_{D1} \approx V_{D2} \approx 0,4V$, $V_{C1} \approx I_{STIMULUS, CRETE} * R1$, avec R1 de l'ordre de 100Ω.

R2 et R3 sont des résistances de grande valeur, typiquement plusieurs centaines de kΩ, et forment un pont diviseur qui permet d'obtenir un potentiel $V_{MESURE}$ dans une plage acceptable par l'organe de mesure qui est par exemple un convertisseur analogue-digital (ADC) intégré à un microcontrôleur. R2 et R3 jouent également le rôle de résistances de décharge lente de C1.

EP 1 968 359 B2

On a donc finalement :

$$V_{MESURE} = I_{STIMULUS, CRETE} * R1 * R3 / (R2+R3) \qquad [II]$$

On voit donc que le signal $V_{MESURE}$ est un signal quasi-continu et qu'il est l'image directe de la valeur crête du courant de stimulation $I_{STIMULUS}$. Comme cela a déjà été mentionné, $V_{MESURE}$ peut être très facilement mesuré par un ADC intégré à un microcontrôleur.

Notons finalement que Z1 (deux diodes Zener tête-bêche) est une protection qui limite la tension aux bornes de (R1, D1) à typiquement 12V.

*Algorithme de mesure du contact d'électrodes*

Le circuit représenté sur la figure 1 permet de mesurer si les électrodes sont en contact direct avec la peau de l'animal sans que ce dernier ne s'en aperçoive. Pour ce faire, le signal COMMANDE est généré avec un rapport cyclique faible (typiquement 10%). Le signal MESURE est mesuré. Si le potentiel du signal mesure est supérieur à un seuil donné ($V_{SEUIL}$), cela signifie qu'un courant $I_{STIMULUS}$ traverse les électrodes et donc que ces électrodes sont en contact avec la peau de l'animal.

Malheureusement, un rapport cyclique de 10% n'est pas toujours adapté dans certaines circonstances particulières :

- lorsque le pelage de l'animal est humide, cela favorise le passage du courant. L'animal perçoit le courant sous forme d'une sensation gênante, ce qui est contraire à l'objectif énoncé ci-dessus ;
- lorsque le pelage de l'animal est dense ou dru, le courant $I_{STIMULUS}$ est arrêté par les poils de l'animal. Ces poils forment en fait alors une très fine couche isolante. $I_{STIMULUS}$ est considéré comme nul alors que les électrodes sont presque en contact avec la peau.

Dans le premier cas, il faudrait utiliser par exemple un rapport cyclique de 5% et dans le second cas un rapport cyclique de 20%. L'algorithme présenté ci-dessous permet de résoudre ce dilemme de façon simple et performante.

L'algorithme consiste à réaliser périodiquement (typiquement toutes les 5 secondes) un cycle de mesure. Ce cycle de mesure dure quelques centaines de millisecondes. Il consiste à appliquer un signal COMMANDE avec un rapport cyclique progressif en partant de 1% et typiquement limité à 20%. Si, pendant ce cycle, le potentiel du signal MESURE ($V_{MESURE}$) dépasse $V_{SEUIL}$, le signal COMMANDE est immédiatement interrompu et le système déduit que le contact est correct. Si, par contre, le potentiel du signal MESURE ne dépasse jamais $V_{SEUIL}$ au cours du cycle de mesure, cela signifie que les électrodes sont vraiment trop éloignées de la peau de l'animal et/ou que le contact est incorrect ou défectueux.

Dans le cas où un microcontrôleur génère le signal COMMANDE et mesure le potentiel du signal MESURE, l'algorithme peut être résumé comme suit :

1. *Appliquer un signal de rapport cyclique de 1% à COMMANDE.*

2. *Mesurer le potentiel du signal MESURE à l'aide de l'ADC.*
*Si $V_{MESURE}$ est supérieur à $V_{SEUIL}$, passer à l'étape 3) .*
*Sinon, si le rapport cyclique est inférieur à 20%, augmenter le rapport cyclique de 1% et recommencer l'étape 2).*
*Sinon passer à l'étape 4)*

3. *Arrêter la génération du signal COMMANDE et déclarer que le contact des électrodes est bon. Passer à l'étape 5) .*

4. *Arrêter la génération du signal COMMANDE et déclarer que le contact des électrodes est insuffisant. Passer à l'étape 5).*

5. *Attendre 5 secondes et passer à l'étape 1).*

Cet algorithme permet ainsi d'adapter le rapport cyclique en fonction des éventuels obstacles, tels que des poils, qui se trouvent entre les électrodes et la peau de l'animal tout en évitant d'appliquer un rapport cyclique trop élevé lorsqu'il n'y a pas d'obstacle et/ou que la peau de l'animal est humide.

*Contrôle du courant de stimulus*

Comme mentionné dans l'introduction, le stimulus est d'intensité variable. Selon l'état de la technique, cela consiste à utiliser des rapports cycliques différents en fonction des intensités de stimulus désirées. Malheureusement, cette technique présente l'inconvénient majeur que l'intensité effective du stimulus perçue par l'animal dépend fortement de la qualité du contact des électrodes. Ainsi, pour un rapport cyclique de 50%, un animal au pelage dense et sec percevra à peine le stimulus alors qu'un animal au pelage humide percevra une sensation douloureuse.

Le circuit présenté permet de résoudre ce problème en réalisant un feedback de la mesure de $I_{STIMULUS}$.

Voici un algorithme d'adaptation du rapport cyclique utilisant le circuit de mesure de courant présenté selon l'invention :

1. *Générer le signal COMMANDE avec un rapport cyclique de 1%.*

2. *Mesurer $V_{MESURE}$ et en déduire $I_{STIMULUS, CRETE}$ à l'aide de l'équation (II) .*

3. *Si $I_{STIMULUS, CRETE}$ est inférieur à la consigne souhaitée, augmenter le rapport cyclique et retourner à l'étape 2) . Sinon, diminuer le rapport cyclique et retourner à l'étape 2) .*

Cet algorithme est un algorithme de régulation qui utilise le circuit de la figure 1 pour mesurer et contrôler l'intensité du stimulus.

L'invention comporte de nombreux avantages par rapport l'état de la technique, dont :

- mesure de qualité de contact des électrodes avec la peau de l'animal, sans que ce dernier ne s'en aperçoive ;
- adaptation automatique du stimulus selon le niveau d'impédance entre les électrodes (application de stimulus adéquat même si l'impédance est très élevée, pas de souffrance inutile de l'animal par amplitude excessive du stimulus si le pelage est humide) ;
- possibilité de travailler en communication RF bidirectionnelle ou non, avec utilisation de configurations automatiques, l'utilisation du mode bidirectionnel augmentant plus que significativement les performances du collier (infos sur l'état de la pile, infos sur la qualité du contact d'électrodes, infos sur l'intensité du stimulus effectif, choix automatique des canaux et sous-canaux, une gestion plus performante de l'énergie fournie par les piles, etc.) ;
- possibilité d'activer ou couper la punition pour maximiser la réactivité, sans risque d'interruption.

**Revendications**

**1.** Circuit récepteur à distance (1) pour fournir et contrôler un stimulus électrique appliqué à un animal, comprenant :

- un interrupteur électronique (2) alimenté par une batterie (3) en série sur le primaire d'un transformateur haute tension (4) et dont l'état On/Off peut être modifié par des impulsions de commande (5), de manière à créer une source de courant alternatif pour l'alimentation dudit primaire du transformateur ;
- une première électrode (6) et une seconde électrode (7) configurées pour être en contact avec l'animal et reliées aux extrémités respectives du secondaire du transformateur (4) ;
- un dispositif de mesure (8, 9) de l'intensité crête du courant de stimulus $I_{STIMULUS, CRETE}$ appliqué via les électrodes au corps de l'animal ;
- un microcontrôleur comprenant un convertisseur analogue-digital ou ADC intégré pour la mesure du courant crête ;
**caractérisé en ce que** le microcontrôleur est configuré pour asservir la génération des impulsions de commande (5) et donc l'intensité du stimulus, appliqué à l'animal, à la mesure de l'intensité crête dudit courant de stimulus $I_{STIMULUS, CRETE}$.

**2.** Circuit selon la revendication 1, **caractérisé en ce que** l'interrupteur électronique (2) est un transistor de puissance dont la base est alimentée par des impulsions de commande (5) modulées en largeur d'impulsion, ou PWM, le transformateur haute tension fonctionnant en mode « flyback ».

**3.** Circuit selon la revendication 1 ou 2, **caractérisé en ce que** les .impulsions de commande (5) sont générées à distance.

**4.** Circuit selon la revendication 1 ou 2, **caractérisé en ce que** le dispositif de mesure de l'intensité crête du courant de stimulus comprend un shunt non linéaire (8) et un détecteur de crête (9).

5. Circuit selon la revendication 4, **caractérisé en ce que** le shunt non linéaire (8) comprend en parallèle, entre l'extrémité du secondaire du transformateur (4) opposée à celle connectée à la première électrode (6) et la deuxième électrode (7), d'une part, une première diode passante (8A) en série avec une résistance R1 (8B) pour créer une chute de tension et, d'autre part, une paire de diodes Zener disposées tête-bêche (8C) pour limiter cette chute de tension.

6. Circuit selon la revendication 5, **caractérisé en ce que** le détecteur de crête (9) comprend une seconde diode passante (9A), connectée d'une part à la résistance R1 (8B) et d'autre part à un condensateur (10) en parallèle sur un diviseur de tension (11) constitué de deux résistances en série R2 et R3.

7. Circuit selon la revendication 6, **caractérisé en ce que** l'intensité crête du courant de stimulus est donnée par l'équation :

$$V_{MESURE} = I_{STIMULUS,\ CRETE} * R1 * R3 / (R2+R3),$$

Où $V_{MESURE}$ est la tension mesurée à la sortie du diviseur de tension (11).

8. Circuit selon la revendication 6, **caractérisé en ce que** la première et la seconde diodes passantes (8A, 9A) sont des diodes schottky.

9. Collier pour dressage d'un animal comprenant un circuit récepteur à distance selon l'une quelconque des revendications précédentes.

10. Appareil pour fournir et contrôler à distance un stimulus électrique appliqué à un animal, comprenant :

   - un transmetteur radiofréquence configuré pour émettre un signal à distance ;
   - un circuit récepteur, selon l'une quelconque des revendications 1 à 8, configuré pour recevoir ledit signal et pour fournir et contrôler ledit stimulus, en fonction du signal reçu.

11. Appareil selon la revendication 10, **caractérisé en ce que** le transmetteur et le circuit récepteur sont tous deux des émetteurs/récepteurs et **en ce que** la communication est bidirectionnelle.

12. Appareil selon la revendication 11, **caractérisé en ce que** le transmetteur est configuré pour recevoir des informations sur l'intensité du stimulus appliqué, sur la qualité de contact des électrodes avec l'animal, sur l'état de charge de la batterie.

13. Appareil selon la revendication 11, **caractérisé en ce que** le transmetteur est configuré pour un choix automatique de canaux et de sous-canaux de communication et pour l'utilisation de codes de taille variable.

14. Utilisation du circuit selon l'une quelconque des revendications 1 à 8, pour l'asservissement de l'intensité du stimulus, appliqué à l'animal, à la mesure de l'intensité crête du courant de stimulus.

15. Procédé de mise en œuvre du circuit selon l'une quelconque des revendications 1 à 8, pour mesurer la qualité du contact des électrodes avec la peau de l'animal, **caractérisé par** les étapes suivantes :

   1. on applique un signal de commande à l'interrupteur électronique dont le rapport cyclique est de 1% ;
   2. on mesure la tension du signal de mesure $V_{MESURE}$ à l'aide d'un convertisseur analogue digital ; si $V_{MESURE}$ est supérieur à une valeur prédéterminée $V_{SEUIL}$, on passe à l'étape 3 ; sinon, si le rapport cyclique est inférieur à 20%, on incrémente le rapport cyclique de 1% et on recommence à l'étape 2 ; sinon on passe à l'étape 4 ;
   3. on arrête la génération du signal de commande et on déclare que le contact des électrodes est bon ; on passe à l'étape 5 ;
   4. on arrête la génération du signal de commande et on déclare que le contact des électrodes est insuffisant ; on passe à l'étape 5 ;
   5. on attend 5 secondes et on passe à l'étape 1).

16. Procédé de régulation du rapport cyclique des impulsions de commande du circuit selon l'une quelconque des revendications 1 à 8, **caractérisé par** les étapes suivantes :

1. on génère le signal de commande avec un rapport cyclique de 1% ;
2. on mesure la tension du signal de mesure $V_{MESURE}$ et on en déduit $I_{STIMULUS, CRETE}$ à l'aide de l'équation :

$$V_{MESURE} = I_{STIMULUS, CRETE} * R1 * R3 / (R2 + R3) ;$$

3. si $I_{STIMULUS, CRETE}$ est inférieur à une valeur de consigne souhaitée, on augmente le rapport cyclique et on retourne à l'étape 2 ; sinon, on diminue le rapport cyclique et on retourne à l'étape 2.

17. Programme d'ordinateur comprenant un code convenant pour mettre en œuvre les étapes du procédé pour mesurer la qualité du contact des électrodes avec la peau de l'animal, selon la revendication 15, lorsque ledit programme est exécuté sur un microcontrôleur.

18. Programme d'ordinateur comprenant un code convenant pour mettre en œuvre les étapes du procédé de régulation du rapport cyclique des impulsions de commande, selon la revendication 16, lorsque ledit programme est exécuté sur un microcontrôleur.

19. Programme d'ordinateur selon la revendication 17 ou 18, mémorisé sur un support lisible par un microcontrôleur.

**Patentansprüche**

1. Ferngesteuerte Empfangsschaltung (1) zum Bereitstellen und Überwachen eines elektrischen Stimulus, der auf ein Tier angewendet wird, umfassend:

- einen elektronischen Schalter (2), der mit einer Batterie (3) in Serie auf der Primärseite eines Hochspannungstransformators (4) betrieben wird und dessen On/Off-Zustand durch Steuerimpulse (5) geändert werden kann, um eine Wechselstromquelle für die Versorgung der Primärseite des Transformators zu erstellen;
- eine erste Elektrode (6) und eine zweite Elektrode (7), die konfiguriert sind, um mit dem Tier Kontakt zu haben, und die mit den jeweiligen Enden der Sekundärseite des Transformators (4) verbunden sind;
- eine Vorrichtung (8, 9) zum Messen der Spitzenintensität des Stimulierungsstroms $I_{STIMULUS,CRETE}$, der über die Elektroden an den Körper des Tiers angelegt wird;
- einen Mikrocontroller aufweisend einen Analog/DigitalWandler, bzw. ADC ausgebildet zum Messen des Spitzenstrom;

**dadurch gekennzeichnet, dass** der Mikrokontroller ausgebildet ist zum Steuern der Erzeugung der Steuerimpulse (5) und damit der Intensität des Stimulus, der auf das Tier angewendet wird, gemäß der Messung der Spitzenintensität des Stimulierungsstroms $I_{STIMULUS,CRETE}$.

2. Schaltung nach Anspruch 1, **dadurch gekennzeichnet, dass** der elektronische Schalter (2) ein Leistungstransistor ist, dessen Basis mit pulsbreitenmodulierten, bzw. PWM-Steuerimpulsen (5) versorgt wird, wobei der Hochspannungstransformator im Rücklaufmodus funktioniert.

3. Schaltung nach Anspruch 1 oder 2, **dadurch gekennzeichnet, dass** die Steuerimpulse (5) ferngesteuert erzeugt werden.

4. Schaltung nach Anspruch 1 oder 2, **dadurch gekennzeichnet, dass** die Vorrichtung zum Messen der Spitzenintensität des Stimulierungsstroms einen nicht linearen Shunt (8) und einen Spitzendetektor (9) umfasst.

5. Schaltung nach Anspruch 4, **dadurch gekennzeichnet, dass** der nicht lineare Shunt (8) parallel, zwischen dem Ende der Sekundärseite des Transformators (4) gegenüber dem Ende, das an die erste Elektrode (6) und die zweite Elektrode (7) angeschlossen ist, einerseits eine erste Durchlassdiode (8A) in Serie mit einem Widerstand R1 (8B), um einen Spannungsabfall zu schaffen, und andererseits ein Paar ZenerDioden, die entgegengesetzt (8C) angeordnet sind, um diesen Spannungsabfall zu begrenzen, umfasst.

**6.** Schaltung nach Anspruch 5, **dadurch gekennzeichnet, dass** der Spitzendetektor (9) eine zweite Durchlassdiode (9A) umfasst, die einerseits an den Widerstand R1 (8B) und andererseits an einen Kondensator (10) parallel auf einem Spannungsteiler (11) angeschlossen ist, der aus zwei Reihenwiderständen R2 und R3 besteht.

**7.** Schaltung nach Anspruch 6, **dadurch gekennzeichnet, dass** die Spitzenintensität des Stimulierungsstroms durch folgende Gleichung gegeben ist:

$$V_{MESURE} = I_{STIMULUS,CRETE} * R1 * R3 / (R2 + R3),$$

wobei $V_{MESURE}$ die Spannung ist, die am Ausgang des Spannungsteilers (11) gemessen wird.

**8.** Schaltung nach Anspruch 6, **dadurch gekennzeichnet, dass** die ersten und zweiten Durchlassdioden (8A, 9A) Schottky-Dioden sind.

**9.** Halsband zum Dressieren eines Tiers, umfassend eine ferngesteuerte Empfangsschaltung nach einem der vorhergehenden Ansprüche.

**10.** Gerät zum ferngesteuerten Bereitstellen und Überwachen eines elektrischen Stimulus, der auf ein Tier angewendet wird, umfassend:

- einen Radiofrequenz-Sender, der konfiguriert ist, um ein ferngesteuertes Signal zu senden;
- eine Empfangsschaltung nach einem der Ansprüche 1 bis 8, die konfiguriert ist, um das Signal zu empfangen und um in Abhängigkeit von dem empfangenen Signal den Stimulus bereitzustellen und zu überwachen.

**11.** Gerät nach Anspruch 10, **dadurch gekennzeichnet, dass** der Sender und die Empfangsschaltung beide Transceiver sind und dass die Kommunikation bidirektional ist.

**12.** Gerät nach Anspruch 11, **dadurch gekennzeichnet, dass** der Sender konfiguriert ist, um Informationen über die Intensität des angewendeten Stimulus, die Kontaktqualität der Elektroden mit dem Tier und den Ladezustand der Batterie zu empfangen.

**13.** Gerät nach Anspruch 11, **dadurch gekennzeichnet, dass** der Sender konfiguriert ist, um automatisch Kommunikationskanäle und -nebenkanäle zu wählen und Codes variabler Größe zu verwenden.

**14.** Verwendung der Schaltung nach einem der Ansprüche 1 bis 8 zur Kontrolle der Intensität des Stimulus, der auf das Tier angewendet wird, gemäß der Messung der Spitzenintensität des Stimulierungsstroms.

**15.** Verfahren zum Einsetzen der Schaltung nach einem der Ansprüche 1 bis 8, um die Kontaktqualität der Elektroden mit der Haut des Tiers zu messen, **gekennzeichnet durch** die folgenden Schritte:

1. Anlegen eines Steuersignals an den elektronischen Schalter, dessen Einschaltdauer 1 % beträgt;
2. Messen der Spannung des Messsignals $V_{MESURE}$ anhand eines Analog/DigitalWandlers; wenn $V_{MESURE}$ größer ist als ein vorherbestimmter Wert $V_{SEUIL}$, Fortfahren mit Schritt 3; ansonsten, wenn die Einschaltdauer geringer als 20 % ist, Erhöhen der Einschaltdauer um 1 %, und wieder mit Schritt 2 beginnen; ansonsten Fortfahren mit Schritt 4;
3. Anhalten der Erzeugung des Steuersignals und Angeben, dass der Kontakt der Elektroden gut ist; Fortfahren mit Schritt 5;
4. Anhalten der Erzeugung des Steuersignals und Angeben, dass der Kontakt der Elektroden unzureichend ist; Fortfahren mit Schritt 5;
5. 5 Sekunden langes Warten und Fortfahren mit Schritt 1.

**16.** Verfahren zum Regulieren der Einschaltdauer der Steuerimpulse der Schaltung nach einem der Ansprüche 1 bis 8, **gekennzeichnet durch** die folgenden Schritte:

1. Erzeugen des Steuersignals mit einer Einschaltdauer von 1 %;
2. Messen der Spannung des Messsignals $V_{MESURE}$ und Ableiten von $I_{STIMULUS, CRETE}$ davon mittels folgender Gleichung:

$$V_{MESURE} = I_{STIMULUS,CRETE} * R1 * R3 / (R2 + R3),$$

3. wenn $I_{STIMULUS, CRETE}$ kleiner ist als ein gewünschter Nennwert, Erhöhen der Einschaltdauer und Zurückkehren zu Schritt 2; ansonsten Verringern der Einschaltdauer und Zurückkehren zu Schritt 2.

17. Computer-Software, umfassend Code, der dazu geeignet ist, die Schritte des Verfahrens zum Messen der Qualität des Kontakts der Elektroden mit der Haut des Tiers, nach Anspruch 15 umzusetzen, wenn die Software auf einem Mikrocontroller ausgeführt wird.

18. Computer-Software, umfassend Code, der dazu geeignet ist, um die Schritte des Verfahrens zum Regulieren der Einschaltdauer der Steuerimpulse nach Anspruch 16 umzusetzen, wenn die Software auf einem Mikrocontroller ausgeführt wird.

19. Computer-Software nach Anspruch 17 oder 18, gespeichert auf einem für einen Mikrocontroller lesbaren Datenträger.

**Claims**

1. A remote receiving circuit (1) for providing and controlling an electric stimulus applied to an animal, comprising:

   - an electronic switch (2) powered by a battery (3) series on the primary of a high-voltage transformer (4), and whose On/Off state may be modified by control pulses (5) so as to create a source of alternating current for supplying said primary of the transformer;
   - a first electrode (6) and a second electrode (7) configured to be in contact with the animal and connected to the respective ends of the secondary of the transformer (4) ;
   - a device (8,9) for measuring the peak intensity of the stimulus current $I_{STIMULUS, PEAK}$ applied through the electrodes to the body of the animal;
   - a microcontroller comprising an analog/digital converter, or ADC, for measuring peak current;

   **characterized in that** the microcontroller is configured for controlling control pulses (5) and thus, the intensity of the stimulus applied to the animal according to the measurement of the peak intensity of said stimulus current $I_{STIMULUS, PEAK}$.

2. The circuit according to Claim 1, **characterized in that** the electronic switch (2) is a power transistor, whose base is supplied by control pulses (5) modulated in terms of pulse width, or PWM, , with the high-voltage transformer operating in flyback mode.

3. The circuit according to Claim 1 or 2, **characterized in that** the control pulses (5) are remotely generated.

4. The circuit according to Claim 1 or 2, **characterized in that** the device for measuring the peak intensity of the stimulus current comprises a non-linear shunt (8) and a peak detector (9).

5. The circuit according to Claim 4, **characterized in that** the non-linear shunt (8) comprises in parallel, between the end of the secondary of the transformer (4) opposite that connected to the first electrode (6) and the second electrode (7), on the one hand, a first pass diode (8A) series connected to a resistor R1 (8B) so as to create a drop in voltage and, on the other hand, a pair of Zener diodes arranged head-to-tail (8C) so as to limit this drop in voltage.

6. The circuit according to Claim 5, **characterized in that** the peak detector (9) comprises a second pass diode (9A), connected on the one hand to the resistor R1 (8B) and on the other hand to a capacitor (10) in parallel on a voltage divider (11) comprising two series resistors R2 and R3.

7. The circuit according to Claim 6, **characterized in that** the peak intensity of the stimulus current is given by the equation:

$$V_{MEASURE} = I_{STIMULUS,PEAK} * R1 * R3 / (R2 + R3) ,$$

where $V_{MEASURE}$ is the voltage measured at the outlet of the voltage divider (11).

**8.** The circuit according to Claim 6, **characterized in that** the first and second pass diodes (8A,9A) are Schottky diodes.

**9.** A collar for training an animal, comprising a remote receiving circuit according to any one of the preceding claims.

**10.** An apparatus for remotely providing and controlling an electric stimulus applied to an animal, comprising:

- a radiofrequency transmitter configured for emitting a remote signal;
- a receiving circuit, according to any one of Claims 1 to 8, configured for receiving said signal and for providing and controlling said stimulus, depending on the signal received.

**11.** The apparatus according to Claim 10, **characterized in that** the transmitter and the receiving circuit are both transceivers and **in that** communication is bidirectional.

**12.** The apparatus according to Claim 11, **characterized in that** the transmitter is configured for receiving information on the intensity of the stimulus applied, the quality of contact of the electrodes with the animal, the charging condition of the battery.

**13.** The apparatus according to Claim 11, **characterized in that** the transmitter is configured for automatically selecting communication channels and sub-channels and for using codes of variable size.

**14.** Use of the circuit according to any one of Claims 1 to 8, for adjusting the intensity of the stimulus applied to the animal to the measurement of the peak intensity of the stimulus current.

**15.** A method for implementing the circuit according to any one of Claims 1 to 8, for measuring the quality of contact of the electrodes with the skin of the animal, **characterized by** the following steps:

1. a control signal is applied to the electronic switch, whose cyclic ratio is 1 %;
2. the voltage of the measuring signal $V_{MEASURE}$ is measured by means of an analog/digital converter; if $V_{MEASURE}$ is greater than a predetermined value $V_{Threshold}$, go to step 3; otherwise, if the cyclic ratio is lower than 20 %, the cyclic ratio is incremented by 1 %, and step 2 is resumed; otherwise go to step 4;
3. the generation of the control signal is stopped and the contact of the electrodes is declared good; go to step 5;
4. the generation of the control signal is stopped and the contact of the electrodes is declared insufficient; go to step 5;
5. wait for 5 seconds and go to step 1.

**16.** A method for regulating the cyclic ratio of the control pulses of the circuit according to any one of Claims 1 to 8, **characterized by** the following steps:

1. the control signal is generated with a cyclic ratio of 1 %;
2. the voltage of the measuring signal $V_{MEASURE}$ is measured and $I_{STIMULUS, PEAK}$ is derived thereof by the equation: $V_{MEASURE} = I_{STIMULUS,PEAK} * R1 * R3 / (R2 + R3)$,
3. if $I_{STIMULUS, PEAK}$ is lower than a desired set point, the cyclic ratio is increased and step 2 is resumed; otherwise, the cyclic ratio is decreased and step 2 is resumed.

**17.** Computer software comprising a code that is suitable for implementing the steps of the method for measuring the quality of contact of the electrodes with the skin of the animal, according to Claim 15, when said software is run on a microcontroller.

**18.** Computer software comprising a code that is suitable for implementing the steps of the method for regulating the cyclic ratio of the control pulses, according to Claim 16, when said software is run on a microcontroller.

**19.** The computer software according to Claim 17 or 18, stored on a microcontroller-readable medium.

FIG.1

**EP 1 968 359 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6327999 B1
- US 5666908 A
- US 6170439 B1
- US 6184790 B1
- AU 2005100421 A4
- US 20060169222 A1